# EUROPEAN PATENT APPLICATION

(11) **EP 4 850 788 A1**
(43) Date of publication of application: **09.12.2026**
(21) Application number: 25181018.0
(22) Date of filing: 05.06.2025
(51) Int. Cl.: B01D 53/047, C01B 3/56

(54) **PURIFICATION OF HYDROGEN OBTAINED FROM AMMONIA CRACKING**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: DUARTE TARAZONA, Annie, 75007 PARIS (FR); BRANDANI, Fédérico, 75007 PARIS (FR); BASIN, Marie, 75007 PARIS (FR); RENOU, Elise, 75007 PARIS (FR)
(74) Representative: Air Liquide

(57) **Abstract**

The invention relates to a process for purifying a cracked gas comprising hydrogen, nitrogen, and ammonia (NH3), using a Pressure Swing Adsorption (PSA) unit (3), the process comprising:
- feeding the cracked gas to an adsorption vessel (4) of the PSA unit (3) downstream of an ammonia cracker (1);
- adsorbing NH3 and moisture from the cracked gas in a first adsorbent layer (5) of alumina (AA) in the adsorption vessel (4);
- adsorbing N2 from the cracked gas in a second adsorbent layer (6) that is arranged downstream of the first adsorbent layer (5) in the adsorption vessel (4);
- wherein the ratio of the volume of the first adsorbent layer (5) (volume AA) to the total adsorbent volume in said adsorption vessel (4) is defined by the correlation: 15 x y_NH3 < volume AA / volume total adsorbent < 15 x (y_NH3 + 1%), where y_NH3 is the molar fraction of NH3 in the cracked gas;
- and wherein the PSA unit (3) works according to an adsorption cycle comprising at least three equalization steps.

## Description

The present invention relates to the purification of hydrogen obtained from ammonia cracking.

Ammonia is increasingly viewed as a good hydrogen carrier, driving developments towards efficient hydrogen production via ammonia cracking. This endothermic, catalytic process, using a furnace, yields a gas mixture of hydrogen (H2) and nitrogen (N2). However, depending on the cracking furnace's operating conditions, the reaction is often incomplete, resulting in residual ammonia (NH3) in the cracked gas, potentially ranging from 0.3 mol% up to 5 mol%. Furthermore, water vapor is generally present in the cracked gas as ammonia feed contains moisture.

To obtain ultra-pure hydrogen (>99.99% H2), this NH3/N2/H2 mixture requires purification.

It is known to carry out a step of pre-treating the cracked gas using a water wash column. This method can remove ammonia down to low concentrations (e.g., below 100 ppm), simplifying the task for a downstream Pressure Swing Adsorption (PSA) unit which then separates hydrogen from nitrogen. The ammonia captured in the water can subsequently be stripped from the effluent for further use. However, this approach comprising a wash necessitates significant volumes of wastewater.

A challenge arises for cracked gas streams containing high molar percentages of ammonia, especially in configurations without upstream purification steps like water wash columns.

There is a need for an efficient purification process capable of handling high ammonia concentrations directly from the cracker while maximizing hydrogen recovery.

For this purpose, the present invention relates to a process for purifying a cracked gas comprising hydrogen, nitrogen, and ammonia (NH3), using a Pressure Swing Adsorption (PSA) unit, the process comprising:
- Feeding the cracked gas to an adsorption vessel of the PSA unit downstream of an ammonia cracker;
- adsorbing NH3 and moisture from the cracked gas in a first adsorbent layer of alumina (AA) in the adsorption vessel;
- adsorbing N2 from the cracked gas in a second adsorbent layer that is arranged downstream of the first adsorbent layer in the adsorption vessel;
- wherein the ratio of the first adsorbent layer volume to the total adsorbent volume in said adsorption vessel is defined by the correlation: 15 x y_NH3 < volume AA / volume total adsorbent < 15 x (y_NH3 + 1%) where y_NH3 is the molar fraction of NH3 in the cracked gas;
- and wherein the PSA unit works according to an adsorption cycle comprising at least three equalization steps.

In one embodiment, an equalization step comprises depressurizing a first adsorption vessel of the PSA unit and repressurizing a second adsorption vessel of the PSA unit with an equalization gas stream discharged from the depressurizing first adsorption vessel.

In one embodiment, the cracked gas is obtained from a reaction of ammonia cracking.

In one embodiment, the cracked gas contains up to 5 mol% NH3.

In one embodiment, the alumina is an activated alumina (AA).

In one embodiment, the molar fraction of NH3 in the fed cracked gas varies from 0.3 mol% to 5 mol%.

In one embodiment, the volume of the first adsorbent layer varies from 10% to 50% of the total volume of adsorbent in said adsorption vessel.

In one embodiment, the first adsorbent layer comprises between 10% and 50% of the total adsorbent volume, for the cracked gas having an ammonia content between 0.3 mol% and 5 mol%.

In one embodiment, the ammonia adsorption capacity of the first adsorbent layer varies from 0.3 to 1.0 mol/kg.

In one embodiment, the second adsorbent layer comprises zeolite.

In one embodiment, the zeolite is faujasite zeolite, in particular X zeolite, or Y zeolite.

In one embodiment, the zeolite is 5A zeolite.

In one embodiment, the ammonia is unconverted ammonia from the ammonia cracker.

In one embodiment, the cracked gas is fed directly to the PSA unit without an upstream wash column to remove ammonia.

The activated alumina (AA) removes moisture and NH3 simultaneously.

In one embodiment, the hydrogen recovery is greater than 82% for y_NH3 <1.5% and greater than 75% for y_NH3 between 1.5% and 3%.

In one embodiment, at least one equalization is associated with a purge.

In one embodiment, the cycle comprises at least one purge step that is separate from the equalization steps.

In one embodiment, the cycle comprises at least one provide purge step comprising providing a gas stream discharged from a depressurizing adsorption vessel to another adsorption vessel undergoing a purge step.

In one embodiment, the cycle comprises at least four equalization steps.

In one embodiment, the cycle comprises at least one blowdown step.

In one embodiment, gas exiting the vessels during depressurization or purging is termed off-gas.

The invention also relates to an apparatus for purifying a cracked gas, in particular a Pressure Swing Adsorption (PSA) unit, comprising:
- an adsorption vessel comprising:
- a first adsorbent layer of alumina (AA) for adsorbing NH3 and moisture from the cracked gas;
- a second adsorbent layer, located downstream of the first adsorbent layer, for separating N2 from H2;
- wherein the volume of the first adsorbent layer is in the range from 10% to 50% of the total volume of adsorbent in said adsorption vessel.
The invention also relates to an ammonia cracker configured for producing a cracked gas, the ammonia cracker comprising said apparatus arranged for purifying the produced cracked gas.

The invention enables to purify hydrogen from a cracked gas streams containing significant levels of residual ammonia (up to molar percentage levels) in a single Pressure Swing Adsorption (PSA) unit, directly downstream from the cracker. The invention eliminates the need for separate, upstream ammonia removal processes, such as a water wash column, which simplifies the overall plant design, potentially resulting in lower capital expenditure and increased efficiency.

The invention provides a correlation for sizing the alumina layer volume relative to the total adsorbent volume, linking it to the molar fraction of NH3 in the cracked gas (y_NH3).

The applicant has found, unexpectedly, that applying this correlation, together with an adsorption cycle comprising at least three equalization steps, enables achieving higher hydrogen recovery rates. For instance, hydrogen recovery is greater than 82% for y_NH3 <1.5% and greater than 75% for y_NH3 between 1.5% and 3%.

The applicant observed that when employing a PSA cycle with only two equalization steps, the resulting hydrogen yield was excessively low.

The following embodiments are examples. Although the description refers to one or more embodiments, this does not necessarily mean that each reference relates to the same embodiment, or that the features only apply to a single embodiment. Individual features of various embodiments can also be combined or interchanged in order to create other embodiments.

### BRIEF DESCRIPTION OF DRAWINGS

Note that all of the features and configurations described above are purely examples. Other features, details and advantages of the invention will become clearer on reading the detailed description set out below, together with several embodiments provided purely as examples and by way of indication, with reference to the attached schematic drawings, in which:
Figure 1 is a schematic diagram of an apparatus for the production of hydrogen from a cracking reaction of ammonia;
Figure 2 is a graph illustrating the correlation for the alumina adsorbent layer volume within a PSA adsorption vessel as a function of the NH3 concentration in the feed gas;
Figure 3 is a graph comparing hydrogen recovery percentages versus NH3 feed composition for various PSA cycle configurations;
Figure 4 is a schematic diagram of a Pressure Swing Adsorption (PSA) cycle sequence, illustrating an exemplary configuration (referred to as Cycle 1234PP_FR);
Figure 5 is a schematic diagram of a Pressure Swing Adsorption (PSA) cycle sequence, illustrating an alternative configuration (referred to as Cycle 813_FR);
Figure 6 is a schematic diagram of a Pressure Swing Adsorption (PSA) cycle sequence, illustrating another configuration (referred to as Cycle 1636_FR).

Throughout the description, identical elements or elements with the same function are designated by the same reference sign.

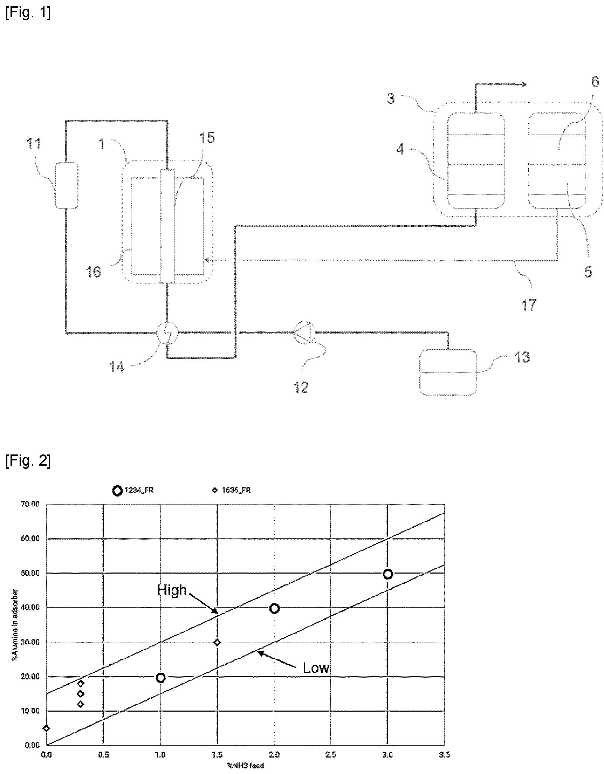

Figure 1 depicts an apparatus for the production of hydrogen from a cracking reaction of ammonia.

The apparatus comprises :
- a pre-cracking reactor 11 arranged for performing a pre-cracking reaction of ammonia and producing from ammonia a partly converted ammonia feed stream.
- a cracker 1 configured for performing a reaction of ammonia cracking and producing a cracked gas from the partly converted ammonia feed stream.
- a pressure swing adsorption (PSA) unit 3 comprising two adsorber vessels 4.

Each adsorber vessel 4 comprises a feed end arranged for receiving the gas to be purified (the cooled cracked gas), a product end downstream of the feed end for discharging a purified hydrogen product from the considered adsorber vessel 4, and an adsorbent bed arranged between the feed end and the product end.

The adsorbent bed comprises an upstream layer 5 of activated alumina adsorbent selectively adsorbent for vaporized water and remaining amounts of unconverted ammonia contained in the gas (also designated as a first adsorbent layer 5 of alumina (AA)), and a downstream layer 6 of 5A zeolite adsorbent selectively adsorbent for nitrogen (also designated as a second adsorbent layer 6). With regard to the feed end, the product end downstream of the feed end, the upstream layer, and the downstream layer, "upstream" and "downstream" are defined with respect to the circulation of the gasses through an adsorber vessel when said adsorption vessel is undergoing an adsorption phase.

The apparatus is connected to a tank for storing and providing liquid ammonia 13 as a feedstock.

With respect to the ammonia feed, the apparatus comprises a pump 12 for pressurizing liquid ammonia 13 from the tank. A heat exchanger 14 is fluidically arranged after the cracker 1 for cooling the cracked gas by heat exchange with an ammonia feed stream to the pre-cracking reactor 11. The heat exchanger comprises a vaporizer for vaporizing the pumped liquid ammonia, for producing a vaporized ammonia feed stream for the pre-cracking reactor 11.

The cracker 1 comprises a reaction section 15 for performing the reaction of ammonia cracking and producing the cracked gas and comprises a furnace 16 arranged in thermal communication with the reaction section 15 to provide heat to the reaction section 15. The reaction section 15 comprises one or more catalyst-containing reactor tubes. Only one tube is depicted on figure 1 for the sake of simplicity.

The apparatus comprises an off gas recycle conduit 17 to recycle an off gas produced by the pressure swing adsorption unit 3 as fuel to the furnace 16.

The process of producing hydrogen from a cracking reaction of ammonia, as illustrated in the figure, comprises:
- pumping liquid ammonia 13.
- vaporizing the pumped liquid ammonia 13 (e.g., in heat exchanger 14), for producing a vaporized ammonia feed stream.
- passing the vaporized ammonia feed stream to the pre-cracking reactor 11 for producing a partly converted ammonia feed stream derived from the vaporized ammonia feed stream.
- passing the partly converted ammonia feed stream to the cracker 1 for producing the cracked gas.

The process further comprises:
- cooling the cracked gas by heat exchange (e.g., in heat exchanger 14), for instance, while performing the step of vaporizing the pumped liquid ammonia 13.
- passing the cooled cracked gas to the pressure swing adsorption unit 3 for producing a purified hydrogen product.

The layer 5 of activated alumina adsorbent removes water and remaining unconverted ammonia from the cooled cracked gas and acts as a protection for the downstream layer 6 of 5A zeolite adsorbent. The layer 6 of 5A zeolite adsorbent removes nitrogen from the gas (now depleted in water and some ammonia) for producing the purified hydrogen product enriched in hydrogen. The pressure swing adsorption unit 3 produces an off gas enriched in nitrogen. The off gas comprises nitrogen, hydrogen and potentially remaining amounts of unconverted ammonia. The adsorbent bed is represented comprising two layers 5, 6 of adsorbent.

The process comprises performing a combustion in the furnace 16 to provide heat to the reaction of ammonia cracking. The off gas recycle conduit 17 enables recycling the off gas as fuel to the furnace 16.

The invention is applicable to the production of hydrogen from ammonia.

The process for purifying the cracked gas within the Pressure Swing Adsorption (PSA) unit 3 is further detailed as follows.

The process for purifying the cracked gas comprising hydrogen, nitrogen, and ammonia (NH3), using the Pressure Swing Adsorption (PSA) unit 3, comprises:
- feeding the cracked gas to the adsorption vessel 4 of the PSA unit 3 downstream of the ammonia cracker 1;
- adsorbing NH3 and moisture from the cracked gas in the first adsorbent layer 5 of alumina (AA) in the adsorption vessel 4;
- adsorbing N2 from the cracked gas in the second adsorbent layer 6 that is arranged downstream of the first adsorbent layer 5 in the adsorption vessel 4;
- wherein the ratio of the first adsorbent layer 5 volume (volume AA) to the total adsorbent volume in said adsorption vessel 4 is defined by the correlation: 15 x y_NH3 < volume AA / volume total adsorbent < 15 x (y_NH3 + 1%) where y_NH3 is the molar fraction of NH3 in the cracked gas;
- and wherein the PSA unit 3 works according to an adsorption cycle comprising at least three equalization steps.

The equalization step comprises depressurizing a first adsorption vessel (e.g., one of the vessels 4) of the PSA unit 3 and repressurizing a second adsorption vessel (e.g., the other vessel 4) of the PSA unit 3 with an equalization gas stream discharged from the depressurizing first adsorption vessel 4.

The cracked gas contains up to 5 mol% NH3.

The alumina (in layer 5) is an activated alumina (AA).

The molar fraction of NH3 in the fed cracked gas varies from 0.3 mol% to 5 mol%.

The volume of the first adsorbent layer 5 varies from 10% to 50% of the total volume of adsorbent in said adsorption vessel 4.

The first adsorbent layer 5 comprises between 10% and 50% of the total adsorbent volume, for the cracked gas having an ammonia content between 0.3 mol% and 5 mol%.

The ammonia adsorption capacity of the first adsorbent layer 5 varies from 0.3 to 1.0 mol/kg.

The second adsorbent layer 6 comprises zeolite.

The zeolite (in layer 6) may be selected amongst faujasite zeolite, in particular X zeolite, or Y zeolite.

The ammonia is unconverted ammonia from the ammonia cracker 1.

The cracked gas is fed directly to the PSA unit 3 without an upstream wash column to remove ammonia.

The activated alumina (AA) in layer 5 removes moisture and NH3 simultaneously.

The hydrogen recovery is greater than 82% for y_NH3 <1.5% and greater than 75% for y_NH3 between 1.5% and 3%.

At least one equalization is associated with a purge.

The cycle comprises at least one purge step that is separate from the equalization steps.

The cycle comprises at least one provide purge step comprising providing a gas stream discharged from a depressurizing adsorption vessel 4 to another adsorption vessel 4 undergoing a purge step.

Gas exiting the vessels 4 during depressurization or purging is termed off-gas.

The invention enables the purification of hydrogen from cracked gas streams containing significant levels of residual ammonia (up to molar percentage levels) in a single Pressure Swing Adsorption (PSA) unit 3, directly downstream from the cracker 1. This approach eliminates the need for separate, upstream ammonia removal processes, such as a water wash column, which simplifies the overall plant design and can potentially result in lower capital expenditure and increased efficiency.

The invention provides a correlation for sizing the alumina layer volume (layer 5) relative to the total adsorbent volume within an adsorption vessel 4, linking it to the molar fraction of NH3 in the cracked gas (y_NH3).

Figure 2 illustrates this relationship, showing the percentage of alumina in the adsorber versus the percentage of NH3 in the feed.

The two lines, labeled "High" and "Low" on the graph, define the correlation boundaries: 15 x y_NH3 < volume AA / volume total adsorbant < 15 x (y_NH3 + 1%).

In the following, the labels for the cycle designate:
1234_FR: This label refers to a PSA cycle configuration as follows:
   - 12 adsorption vessels in total;
   - 3 vessels operating simultaneously in the adsorption phase;
   - 4 equalization steps in the cycle.
813_FR: This label refers to a PSA cycle configuration as follows:
   - 8 adsorption vessels in total;
   - 1 vessel operating in the adsorption phase;
   - 3 equalization steps in the cycle.
1636_FR: This label refers to a PSA cycle configuration as follows:
   - 16 adsorption vessels in total;
   - 3 vessels operating in the adsorption phase;
   - 6 equalization steps in the cycle.
512_FR: This label refers to a PSA cycle configuration as follows:
   - 5 adsorption vessels in total;
   - 1 vessel operating in the adsorption phase;
   - 2 equalization steps in the cycle.
612_FR: This label refers to a PSA cycle configuration as follows:
   - 6 adsorption vessels in total;
   - 1 vessel operating in the adsorption phase;
   - 2 equalization steps in the cycle.

The points plotted on Figure 2 correspond to different simulated PSA cycles, such as 1234_FR, and 1636_FR, which generally fall within this optimal alumina volume band.

The applicant has found, unexpectedly, that applying this correlation, together with an adsorption cycle comprising at least three equalization steps, enables achieving higher hydrogen recovery rates. For instance, for the three main simulated cycles (1234_FR, 813_FR, 1636_FR), acceptable hydrogen recovery is considered greater than 82% for an NH3 feed content (y_NH3) below 1.5%, and greater than 75% for an NH3 feed content between 1.5% and 3%. The applicant observed that when employing a PSA cycle with only two equalization steps, the resulting hydrogen yield was excessively low, leading to insufficient performance.

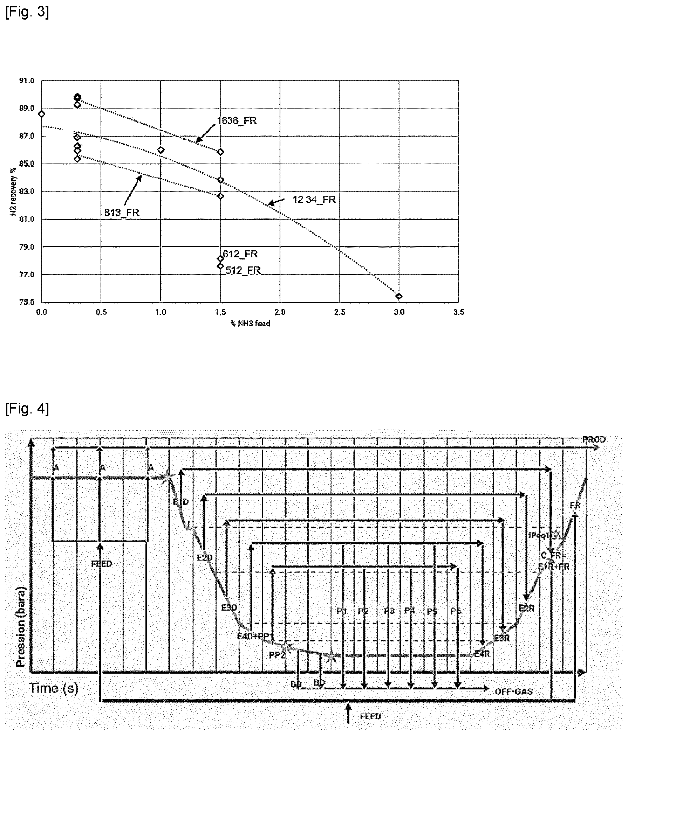

These findings regarding hydrogen yield, in relation to the adsorbent volume correlation and the minimum number of equalization steps, can be further derived from the curves presented in Figure 3. This figure shows H2 recovery percentage versus NH3 feed composition for different PSA cycle configurations.

The data series for cycles 1234_FR, 813_FR, and 1636_FR represent examples of cycles with three or more equalization steps. These cycles demonstrate the targeted high hydrogen recovery rates.

In contrast, the data series for cycles 512_FR and 612_FR represent cycles, employing fewer than three equalization steps (here two equalization steps), exhibit significantly lower hydrogen yields compared to the cycles with three or more equalization steps.

These graphs (Figures 2 and 3) support the approach of using a specific alumina layer sizing in conjunction with an adequate number of equalization steps in the PSA cycle to efficiently purify hydrogen from ammonia-rich cracked gas.

Figure 4 provides a schematic diagram of a Pressure Swing Adsorption (PSA) cycle sequence for an example labeled "Cycle 1234_FR". This cycle is performed with 12 adsorption vessels 4 (each comprising a first adsorbent layer 5 and a second adsorbent layer 6 arranged downstream of the first layer 5). The cycle features 3 vessels operating at the same time in adsorption and includes 4 equalization steps. Within Figure 4, the depressurizations of these equalization steps are designated E1D, E2D, E3D, and E4D, while the corresponding repressurizations are denoted E1R, E2R, E3R, and E4R. As clearly shown in the diagram, each equalization step comprises one such depressurization and a subsequent repressurization. The arrows, for example from point E1D to point E1R, indicate the depressurization of a first adsorption vessel 4 and the repressurization of a second adsorption vessel with an equalization gas stream discharged from the depressurizing first vessel. On the left of this diagram, three vertical ascending arrows (A) show the three adsorption phases, which yield the purified hydrogen. The small stars shown on the diagram represent pressures needed to calculate the adsorption cycle: from left to right, they indicate adsorption pressure, an intermediate pressure, and regeneration pressure. The sequence also includes multiple purge stages (labeled P1, P2, P3, P4, P5, P6), provide purge steps (PP1, PP2) and two Blowdown steps (BD) that vent to the off-gas line. Part of the gas from E4D is used for the provide purge PP1 and another part is used for the equalization E4R. Repressurization is performed only with feed gas.

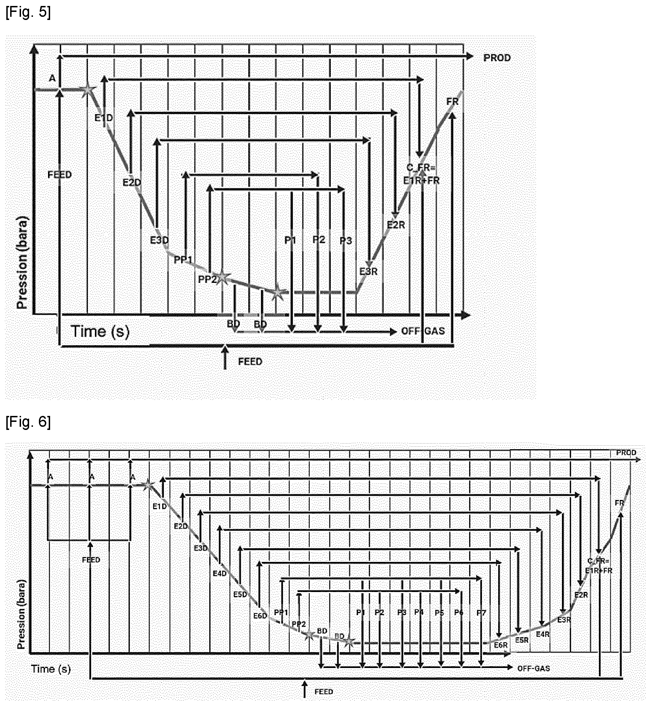

Figure 5 illustrates another PSA cycle embodiment, "Cycle 813_FR". This cycle is performed with 8 adsorption vessels and comprises 1 vessel operating in adsorption, and 3 equalization steps. Within this diagram, the depressurizations of these equalization steps are designated E1D, E2D, and E3D, while the corresponding repressurizations are denoted E1R, E2R, and E3R (E3D for 3rd depressurization step, E3R for 3rd repressurization step). This diagram also shows purge steps (P1, P2, P3), blowdown (BD), provide purge points (PP1, PP2), and pressure indication stars similar to Figure 4.

Figure 6 depicts a further PSA cycle embodiment, "Cycle 1636_FR". This cycle is performed with 16 adsorption vessels and comprises 3 vessels operating simultaneously in adsorption, and 6 equalization steps. Within this diagram, the depressurizations of these equalization steps are designated E1D, E2D, E3D, E4D, E5D, and E6D, while the corresponding repressurizations are denoted E1R, E2R, E3R, E4R, E5R, and E6R. Similar to the previous cycle diagrams, it also shows multiple purge steps (P1 through P7), blowdown (BD), provide purge points (PP1, PP2), and pressure indication stars.

## Claims

1. A process for purifying a cracked gas comprising hydrogen, nitrogen, and ammonia (NH3), using a Pressure Swing Adsorption (PSA) unit (3), the process comprising:
- feeding the cracked gas to an adsorption vessel (4) of the PSA unit (3) downstream of an ammonia cracker (1);
- adsorbing NH3 and moisture from the cracked gas in a first adsorbent layer (5) of alumina (AA) in the adsorption vessel (4);
- adsorbing N2 from the cracked gas in a second adsorbent layer (6) that is arranged downstream of the first adsorbent layer (5) in the adsorption vessel (4);
- wherein the ratio of the volume of the first adsorbent layer (5) (volume AA) to the total adsorbent volume in said adsorption vessel (4) is defined by the correlation: 15 x y_NH3 < volume AA / volume total adsorbent < 15 x (y_NH3 + 1%), where y_NH3 is the molar fraction of NH3 in the cracked gas;
- and wherein the PSA unit (3) works according to an adsorption cycle comprising at least three equalization steps.

2. A process according to claim 1, wherein an equalization step comprises depressurizing a first adsorption vessel (4) of the PSA unit (3) and repressurizing a second adsorption vessel (4) of the PSA unit (3) with an equalization gas stream discharged from the depressurizing first adsorption vessel (4).

3. A process according to claim 1 or 2, wherein the cracked gas contains up to 5 mol% NH3.

4. A process according to any one of the preceding claims, wherein the alumina of the first adsorbent layer (5) is activated alumina (AA).

5. A process according to any one of the preceding claims, wherein the molar fraction of NH3 (y_NH3) in the fed cracked gas varies from 0.3 mol% to 5 mol%.

6. A process according to any one of the preceding claims, wherein the second adsorbent layer (6) comprises zeolite.

7. A process according to claim 6, wherein the zeolite is 5A zeolite.

8. A process according to any one of the preceding claims, wherein the cracked gas is fed directly to the PSA unit (3) without an upstream wash column to remove ammonia.

9. A process according to any one of the preceding claims, wherein the hydrogen recovery is greater than 82% for y_NH3 <1.5% and greater than 75% for y_NH3 between 1.5% and 3%.

10. A process according to any one of the preceding claims, wherein the adsorption cycle comprises at least four equalization steps.

11. A process according to any one of the preceding claims, wherein the ammonia adsorption capacity of the first adsorbent layer (5) varies from 0.3 to 1.0 mol/kg.

12. A process according to any one of the preceding claims, wherein the adsorption cycle comprises at least one purge step that is separate from the equalization steps.

13. A process according to any one of the preceding claims, wherein the adsorption cycle comprises at least one provide purge step comprising providing a gas stream discharged from a depressurizing adsorption vessel (4) to another adsorption vessel (4) undergoing a purge step.

14. A process according to any one of the preceding claims, wherein the adsorption cycle comprises at least one blowdown step.

15. An apparatus for purifying a cracked gas, in particular a Pressure Swing Adsorption (PSA) unit, comprising:
- an adsorption vessel comprising:
∘ a first adsorbent layer of alumina (AA) for adsorbing NH3 and moisture from the cracked gas;
∘ a second adsorbent layer, located downstream of the first adsorbent layer, for separating N2 from H2;
∘ wherein the volume of the first adsorbent layer is in the range from 10% to 50% of the total volume of adsorbent in said adsorption vessel.
